# EUROPEAN PATENT SPECIFICATION

(11) **EP 1 087 001 B1**
(45) Date of publication and mention of the grant of the patent: **01.12.2004**
(21) Application number: 00307943.1
(22) Date of filing: 13.09.2000
(51) Int. Cl.: C09D 183/04, C08L 83/04, C08K 5/09

(54) **Curable abrasion-resistant coating compositions**
Härtbare abriebfeste Beschichtungszusammensetzung
Composition de revêtement durcissable résistante à l'abrasion

(30) Priority: 24.09.1999 US 404646
(43) Date of publication of application: 28.03.2001
(73) Proprietor: GENERAL ELECTRIC COMPANY, Schenectady, NY 12345 (US)
(72) Inventor: Patel, Gautam Ambalal, Clifton Park, New York 12065 (US); Gillette, Gregory Ronald, Clifton Park, New York 12065 (US)
(74) Representative: Szary, Anne Catherine, Dr.

(56) References cited:
- US-A- 4 177 315
- US-A- 4 315 091
- US-A- 5 503 935

## Description

This invention relates to abrasion resistant thermally curable compositions, and more particularly to coating compositions having improved adhesion to substrates.

It has long been conventional to apply so-called "silicone hardcoat" compositions to abrasion-susceptible substrates such as polycarbonates and poly(methyl methacrylate) in sheet form, to improve their abrasion resistance. These silicone hardcoat compositions are typically formed from dispersions of colloidal silica in an acidified combination of water and an organic solvent such as one or more alcohols, said dispersions also containing a partial condensate of an organoalkoxysilane such as methyltrimethoxysilane. Upon curing by heating or by application of infrared or microwave energy, further condensation occurs to form a highly abrasion resistant surface.

For many years it was necessary to first apply a primer to the substrate to improve its adhesion to the hardcoat. Commonly used primers include solvent solutions of acrylic polymers. Recently, however, primerless silicone hardcoat compositions have been developed. A typical composition of this type, disclosed in US Patent 5,503,935, comprises, in addition to the previously described materials, an adhesion promoting constituent which may be a (meth)acrylated (i.e., acrylated or methacrylated) polyurethane or an acrylate polymer containing reactive sites.

Such primerless hardcoat compositions are very advantageous by reason of their capability to afford abrasion resistance with minimum processing of the substrate. However, some deficiencies in adhesion of the hardcoat to the substrate have been observed. These deficiencies manifest themselves by way of haze formation upon weathering and also microcracking; i.e. the formation of minuscule cracks in the hardcoat layer. In addition, the cure time required for the primerless formulations is somewhat long, frequently greater than 60 minutes.

It is of interest, therefore, to develop primerless hardcoat formulations with improved adhesion and decreased cure time.

### SUMMARY OF THE INVENTION

The present invention is based on the discovery that improved adhesion of a primerless hardcoat to a substrate as well as decreased cure time may be achieved by incorporation in the curable hardcoat-producing composition an increased level of an acidic constituent such as acetic acid.

In one of its aspects, therefore, the invention includes thermally curable compositions comprising the following and any reaction products thereof:
(A) a partial condensate of at least one organoalkoxysilane,
(B) colloidal silica,
(C) an adhesion promoter selected from the group consisting of (meth)acrylated polyurethanes and acrylic copolymers having reactive sites,
(D) water,
(E) a volatile organic diluent and
(F) an amount of at least one carboxylic acid, a major proportion of said carboxylic acid having a vapor pressure at 125°C of at least 100 kPa, effective to produce a measured pH of said composition in the range of 4.0 to 6.0.

Another aspect of the invention is a method for producing a cured coating on a thermoplastic sheet which comprises:
(I) coating said sheet with a thermally curable composition as described above; and
(II) thermally curing the coated sheet thus formed under conditions effective to volatilize components D, E and F.

Still other aspects include compositions prepared by thermal curing of said curable compositions and coated thermoplastic sheets prepared by said method.

### DETAILED DESCRIPTION; PREFERRED EMBODIMENTS

As is well known to those skilled in the art, the constituents of the curable compositions of this invention, particularly components A and D, can undergo a curing reaction which, in the final analysis, is essential to the production of the hardcoat. It is uncertain, and not critical to the operability of the invention, to what minor degree such a reaction may take place immediately upon mixing the components and within a relatively short period thereafter. Accordingly, this aspect of the invention includes mixtures of the recited components and any reaction products thereof. Moreover, the designation "component" is employed herein irrespective of whether reaction has taken place.

Component A, then, is a partial condensate of at least one organoalkoxysilane, said organoalkoxysilane typically having the formula

(R¹)ₐSi(OR²)₄₋ₐ

wherein R¹ is a C₁₋₆ monovalent hydrocarbon radical, R² is hydrogen or a C₁₋₆ monovalent hydrocarbon radical and a is 1 or 2. The hydrocarbon radicals are preferably C₁₋₄ alkyl radical. The organoalkoxysilanes are most often those in which R¹ is methyl and R² is methyl, hydrogen or a mixture thereof, with compositions comprising methyltrimethoxysilane being particularly preferred.

Component B is colloidal silica, generally present in the form of an aqueous-organic dispersion with component A. Silica dispersions which can be employed are exemplified in US Patents 3,986,997 and 4,177,315 and the aforementioned 5,503,935.

Component C, the adhesion promoter, may be one of those disclosed in the aforementioned US Patent 5,503,935. Acrylated urethanes include ACTILANE CB-32 of SNPE Chemie and EBECRYL 8804 of Radcure Specialties, Inc. Methacrylated urethanes include M-407 of Echo Resins & Laboratory.

Reactive sites in acrylic copolymers are exemplified by amine, carboxylic acid, epoxy, hydroxy and amide groups, with hydroxy often being preferred. Suitable copolymers include the JONCRYL acrylic polyols of S. C. Johnson Co. and the ACRYLOID acrylic resins from Rohm & Haas Co. Specific examples are given in Table I.

**TABLE I**

| Resin | Mn | Mw/Mn | Tg, °C | Hydroxyl no. |
|---|---|---|---|---|
| | | | | |
| JONCRYL 587 | 5,500 | 2.7 | 40 | 94 |
| JONCRYL 588 | 3,500 | 2.7 | 20 | 120 |
| JONCRYL 906 | 3,210 | 2.9 | 36 | 94 |
| SCX-901 | 2,330 | 2.7 | 20 | 112 |
| JONCRYL 510 | 1,340 | 1.7 | 5 | 140 |
| JONCRYL 500 | 1,300 | 1.7 | 5 | 140 |

Components D and E are water and a volatile organic diluent, the latter most often being the diluent employed in the previously mentioned aqueous-organic dispersion. The preferred organic diluents are C₁₋₄ primary and secondary alkanols such as methanol, ethanol, 1-propanol, 2-propanol and 1-butanol; glycol ethers such as propylene glycol monomethyl ether may also be used. Most preferably, component E is a mixture of 2-propanol and 1-butanol.

Component F is at least one carboxylic acid, a major proportion (i.e., greater than 50% by weight) of which has a vapor pressure which is at least 100 kPa at 125°C. Thus, more than one acid may be employed with the proviso that the acid present in major amount has such a vapor pressure. Usually, however, the use of a single acid is preferred. Carboxylic acids having the required vapor pressure include formic acid and acetic acid. Acetic acid is preferred, and frequent reference hereinafter will be made to acetic acid as component F.

Typically, the curable compositions of the invention are prepared by initially blending the organoalkoxysilane (component A) with a portion of the carboxylic acid (component F) and subsequently adding aqueous colloidal silica. The remainder of component F is then added, followed by component E and any optional constituents, such as ultraviolet absorbers (e.g., silylated and non-silylated benzophenones, benzotriazoles, triazines, cyanoacrylates, benzylidene malonates), flow control or leveling agents (e.g., silicone-based materials), curing catalysts (e.g., alkali metal carboxylates or quaternary ammonium carboxylates such as tetra-n-butylammonium acetate), free radical initiators, hindered amine light stabilizers, antioxidants and dyes. Finally, component C is introduced.

The invention is based on the discovery that presence of the acid in a threshold amount affords significant improvement in various properties including adhesion of the hardcoat and curing time thereof. Preferably, the amount of acid present is an amount effective to produce a measured pH of the curable composition of in the range of 4.0-6.0. By "measured pH" is meant the pH value recorded in a standard calomel pH electrode system. It should be understood that the measured pH may not be an accurate reflection of the hydrogen ion concentration of the system, by reason of the presence of organic solvents such as alkanols which have polarities significantly different from that of water.

Typical weight ratios of organoalkoxysilane to silica are in the range of about 2-6:1. Solvent proportions, chiefly organic solvent and water but including other volatiles such as acetic acid, are ordinarily adjusted to afford a composition with a solids content (organoalkoxysilane, silica and other normally solid constituents) in the range of about 25-45% by weight.

The amount of adhesion promoter (component C) in the composition is an amount effective to produce a composition having a high degree of adhesion to the substrate. This amount is most often in the range of about 0.1-10%, preferably about 2-5%, by weight based on total curable composition. Curing catalyst, when present, is in an amount effective to accelerate curing and preferably in the range of about 0.01-0.4% by weight on the same basis; at levels above 0.4%, an adverse effect on adhesion may be demonstrated by increased microcracking tendency.

Thermoplastic sheet materials which can be coated with the curable compositions of this invention are widely diverse in structure. Examples are polyphenylene ether-polystyrene blends, polyetherimides, polyesters and polysulfones. For the most part, however, those materials which are coated to advantage are polycarbonates, particularly bisphenol A polycarbonates, and poly(methyl methacrylate). When so coated, they have superior resistance to abrasion.

According to the method of the invention, application of the curable composition to the substrate can be by any one of the well known methods such as spraying, dipping and roller coating. Following application, the composition is cured thermally, typically by heating at temperatures in the range of about 120-150°C for periods of time typically in the range of about 30-90 minutes, or by the use of infrared or microwave energy. It is essential, for the production of an article with acceptable properties, to volatilize substantially all of component F during the curing step.

The resulting coatings are optically clear. The coated sheet materials have numerous uses of which examples are as windshields, lamp envelopes and safety glass.

The invention is illustrated by the following examples. All parts and percentages are by weight.

### EXAMPLES 1-11

In a glass bottle equipped with a stirrer, 406 grams (g) of methyltrimethoxysilane was mixed with 2.5 g of acetic acid. In a separate vessel, 251 g of a silica sol (LUDOX AS, DuPont Co.) was mixed with 83 g of deionized water to reduce the silica level to 30 wt.%. The diluted silica sol was then added, with stirring, to the acidified methyltrimethoxysilane and stirring was continued for 4 hours at room temperature. An additional 25.2 g of acetic acid (1.8% of final reaction mixture) was added and stirring was continued for 3 hours to effect hydrolysis-condensation.

The mixture was diluted with 700 g of a 1:1 mixture of 2-propanol and 1-butanol, producing a solution having a measured pH of 5.7. Then, 70 g of a 53% solution of a silylated hydroxybenzophenone in methanol was added. The resulting solution, containing about 22% resin solids, was allowed to age for 3 weeks, after which various proportions of JONCRYL 587 acrylic copolymer and, in some examples, of tetra-n-butylammonium acetate as a curing catalyst were added to produce curable coating compositions.

Bisphenol A polycarbonate panels, 15.2 x 20.3 x 0.32 centimeters (cm), were flow coated with the coating compositions and air dried for 15 minutes. The coatings were then cured by heating in an air-circulated convection oven at 130°C for various periods. The resulting optically clear hardcoats were 5-8 microns thick.

Abrasion resistance of the hardcoats was evaluated using the Taber test (500 cycles) (ASTM procedure D1044). Adhesion was evaluated by the cross-hatch tape adhesion test (ASTM procedure D3359) after immersion of the panels in deionized water at 65°C, and also by the appearance of microcracking after weathering in a QUV accelerated weatherometer, microcracking being evidenced by a reflective appearance upon backlighting. The results are given in Table II, in comparison with nine controls (C1-9) in which only 0.16% acetic acid, introduced with the methyltrimethoxysilane, was employed to produce a solution with a measured pH of 7.2.

**TABLE II**

| Example | Comp. C, % | Catalyst, % | Curing time, min. | Taber haze, % | Adhesion failure, days | Exp. time to microcracking, hrs. |
|---|---|---|---|---|---|---|
| | | | | | | |
| 1 | 3.2 | 0 | 15 | 10.3 | 1 | -- |
| 2 | 3.2 | 0 | 30 | 8.5 | >30 | 3,900 |
| 3 | 3.2 | 0 | 45 | 7.3 | >30 | -- |
| 4 | 3.2 | 0 | 60 | 7.8 | >30 | -- |
| 5 | 3.2 | 0.2 | 15 | 9.6 | 22 | -- |
| 6 | 3.2 | 0.2 | 30 | 7.8 | >30 | 3,500 |
| 7 | 3.2 | 0.2 | 45 | 6.7 | >30 | -- |
| 8 | 3.2 | 0.2 | 60 | 6.4 | >30 | -- |
| 9 | 4.8 | 0.2 | 15 | 10.5 | >30 | -- |
| 10 | 3.2 | 0.4 | 30 | -- | -- | 3,000 |
| 11 | 3.2 | 0.6 | 30 | -- | -- | 1,400 |
| C1 | 3.2 | 0 | 15 | -- | * | -- |
| C2 | 3.2 | 0 | 30 | 17.5 | * | -- |
| C3 | 3.2 | 0 | 45 | 14.6 | 1 | -- |
| C4 | 3.2 | 0 | 60 | 12 | 1 | -- |
| C5 | 3.2 | 0.2 | 15 | 15.4 | 2 | -- |
| C6 | 3.2 | 0.2 | 30 | 11.7 | 12 | -- |
| C7 | 3.2 | 0.2 | 45 | 10.1 | 29 | -- |
| C8 | 3.2 | 0.2 | 60 | 8.9 | >30 | -- |
| C9 | 4.8 | 0.5 | 30 | -- | -- | 1,850 |

| | | | | | | |
|---|---|---|---|---|---|---|
| *Initial adhesion failed. | | | | | | |

A comparison of the Taber haze ratings for Examples 1-8 and corresponding Controls 1-8 shows the improvement in abrasion resistance at relatively low curing times afforded by the compositions of the invention. A comparable improvement in adhesion is demonstrated by the adhesion failure results, as well as the exposure times to microcracking. Example 11 demonstrates the adverse effect on adhesion of a catalyst level greater than 0.4%, particularly in comparison with Control 9.

## Claims

1. A thermally curable composition comprising the following and any reaction products thereof:
(A) a partial condensate of at least one organoalkoxysilane,
(B) colloidal silica,
(C) an adhesion promoter selected from the group consisting of (meth)acrylated polyurethanes and acrylic copolymers having reactive sites,
(D) water,
(E) a volatile organic diluent and
(F) an amount of at least one carboxylic acid, a major proportion of said carboxylic acid having a vapor pressure at 125°C of at least 100 kPa, effective to produce a measured pH of said composition in the range of 4.0 to 6.0.

2. The composition according to claim 1 wherein component F is acetic acid.

3. The composition according to claim 1 or claim 2 wherein component A is a partial condensate of a compound of the formula
(R¹)ₐSi(OR²)₄₋ₐ
wherein R¹ is a C₁₋₆ monovalent hydrocarbon radical, R² is hydrogen or a C₁₋₆ monovalent hydrocarbon radical and a is 1 or 2.

4. The composition according to any preceding claim wherein component E is at least one C₁₋₄ primary or secondary alkanol.

5. The composition according to any preceding claim wherein component C is a (meth)acrylated polyurethane or an acrylic copolymer with hydroxy reactive sites.

6. The composition according to any preceding claim wherein the amount of component C is in the range of about 0.1-10% by weight based on total curable composition.

7. The composition according to any preceding claim further comprising a curing catalyst.

8. A thermally curable composition according to claim 1 comprising the following and any reaction products thereof:
(A) a partial condensate of methyltrimethoxysilane,
(B) colloidal silica,
(C) an adhesion promoter selected from the group consisting of (meth)acrylated polyurethanes and acrylic copolymers having reactive sites,
(D) water,
(E) as a volatile organic diluent, at least one C₁₋₄ primary or secondary alkanol, and
(F) acetic acid in an amount effective to produce a measured pH of said composition in the range of 4.0 to 6.0.

9. A method for producing a cured coating on a thermoplastic sheet which comprises:
(I) coating said sheet with a thermally curable composition comprising the following and any reaction products thereof:
(A) a partial condensate of at least one organoalkoxysilane,
(B) colloidal silica,
(C) an adhesion promoter selected from the group consisting of (meth)acrylated polyurethanes and acrylic copolymers having reactive sites,
(D) water,
(E) a volatile organic diluent and
(F) an amount of at least one carboxylic acid, a major proportion of said carboxylic acid having a vapor pressure at 125°C of at least 100 kPa, effective to produce a measured pH of said composition in the range of 4.0 to 6.0; and
(II) thermally curing the coated sheet thus formed under conditions effective to volatilize components D, E and F.

10. A method according to claim 9 for producing a cured coating on a thermoplastic sheet which comprises:
(I) coating said sheet with a thermally curable composition comprising the following and any reaction products thereof:
(A) a partial condensate of methyltrimethoxysilane,
(B) colloidal silica,
(C) an adhesion promoter selected from the group consisting of (meth)acrylated polyurethanes and acrylic copolymers having reactive sites,
(D) water,
(E) as a volatile organic diluent, at least one C₁₋₄ primary or secondary alkanol, and
(F) acetic acid in an amount effective to produce a measured pH of said composition in the range of 4.0 to 6.0; and
(II) thermally curing the coated sheet thus formed under conditions effective to volatilize components D, E and F.

## Patentansprüche

1. Eine thermisch härtbare Zusammensetzung umfassend das Folgende und beliebige Reaktionsprodukte daraus:
(A) ein partielles Kondensat wenigstens eines Organoalkoxysilans,
(B) kolloide Silica,
(C) einen Haftungsverbesserer ausgewählt aus der Gruppe bestehend aus (meth)acrylierten Polyurethanen und acrylischen Copolymeren mit reaktiven Stellen,
(D) Wasser,
(E) ein flüchtiges organisches Verdünnungsmittel und
(F) eine Menge wenigstens eine Carbonsäure, wobei ein überwiegender Anteil der Carbonsäure einen Dampfdruck bei 125°C von wenigstens 100 kPa hat, die in der Lage ist, einen gemessenen pH der Zusammensetzung im Bereich von 4,0 bis 6,0 zu erzeugen.

2. Zusammensetzung gemäß Anspruch 1, **dadurch gekennzeichnet, dass** die Komponente F Essigsäure ist.

3. Zusammensetzung gemäß Anspruch 1 oder Anspruch 2, **dadurch gekennzeichnet, dass** die Komponente A ein partielles Kondensat einer Verbindung der Formel ist
(R¹)ₐSi(OR²)₄₋ₐ
worin R¹ ein monovalenter C₁₋₆ Kohlenwasserstoffrest ist, R² Wasserstoff oder ein monovalenter C₁₋₆ Kohlenwasserstoffrest ist und a 1 oder 2 ist.

4. Zusammensetzung gemäß einem der vorhergehenden Ansprüche, **dadurch gekennzeichnet, dass** die Komponente E wenigstens ein primäres oder sekundäres C₁₋₄ Alkanol ist.

5. Zusammensetzung gemäß einem der vorhergehenden Ansprüche, **dadurch gekennzeichnet, dass** die Komponente C ein (meth)acryliertes Polyurethan oder ein acrylisches Copolymer mit reaktiven Hydroxystellen ist.

6. Zusammensetzung gemäß einem der vorhergehenden Ansprüche, **dadurch gekennzeichnet, dass** die Menge der Komponente C im Bereich von etwa 0,1 bis 10 Gew.-% ist, bezogen auf die gesamte härtbare Zusammensetzung.

7. Zusammensetzung gemäß einem der vorhergehenden Ansprüche, **dadurch gekennzeichnet, dass** die sie weiterhin einen Härtungskatalysator umfasst.

8. Eine thermisch härtbare Zusammensetzung gemäß Anspruch 1 umfassend das folgende und jegliche Reaktionsprodukte daraus:
(A) ein partielles Kondensat des Methyltrimethoxysilans,
(B) kolloide Silica,
(C) einen Haftungsverbesserer ausgewählt aus der Gruppe bestehend aus (meth)acrylierten Polyurethanen und acrylischen Copolymeren mit reaktiven Stellen,
(D) Wasser,
(E) als flüchtiges organisches Verdünnungsmittel wenigstens ein primäres oder sekundäres C₁₋₄ Alkanol, und
(F) Essigsäure in eine Menge, die einen gemessenen pH der Zusammensetzung im Bereich von 4,0 bis 6,0 bewirkt.

9. Verfahren zur Herstellung eines gehärteten Überzugs aus einem thermoplastischen flächigen Gebilde, bei welchem man:
(I) das flächige Gebilde mit einer thermisch härtbaren Zusammensetzung beschichtet, welche das Folgende und jegliche Reaktionsprodukte daraus umfasst:
(A) ein partielles Kondensat wenigstens eines Organoalkoxysilans,
(B) kolloide Silica,
(C) einen Haftungsverbesserer ausgewählt aus der Gruppe bestehend aus (meth)acryliertem Polyurethan und acrylischen Copolymeren mit reaktiven Stellen,
(D) Wasser,
(E) ein flüchtiges organisches Verdünnungsmittel und
(F) eine wirksame Menge wenigstens eine Carbonsäure, wobei ein überwiegender Anteil der Carbonsäure einen Dampfdruck bei 125°C von wenigstens 100 kPa hat, zur Erzeugung eines gemessenen pH der Zusammensetzung im Bereich von 4,0 bis 6,0;
(II) das somit geformte beschichtete flächige Gebilde unter Bedingungen thermisch härtet, welche die Verflüchtigung der Komponenten D, E und F bewirken.

10. Verfahren gemäß Anspruch 9, **dadurch gekennzeichnet, dass** man eine gehärtete Beschichtung auf einem thermoplastischen flächigen Gebilde herstellt, bei welchem man:
(I) das flächige Gebilde mit einer thermisch härtbaren Zusammensetzung beschichtet, umfassend das Folgende und jegliche Reaktionsprodukte daraus:
(A) ein partielles Kondensat des Methyltrimethoxysilans,
(B) kolloide Silica,
(C) einen Haftungsverbesserer ausgewählt aus der Gruppe der (meth)acrylierten Polyurethane und acrylischen Copolymere mit reaktiven Stellen,
(D) Wasser,
(E) als ein flüchtiges organisches Verdünnungsmittel wenigstens ein primäres oder sekundäres C₁₋₄ Alkanol, und
(F) Essigsäure in einer zur Erzeugung eines gemessenen pH der genannten Zusammensetzung im Bereich von 4,0 bis 6,0 wirksamen Menge; und
(II) das so geformte beschichtete flächige Gebilde unter Bedingungen thermisch härtet, die die Verflüchtigung der Komponenten D, E und F bewirken.

## Revendications

1. Composition durcissable sous l'effet de la chaleur, qui comprend les ingrédients suivants et tout produit de réaction de ces ingrédients :
(A) un condensat partiel d'au moins un organoalcoxysilane,
(B) de la silice colloïdale,
(C) un agent favorisant l'adhérence, choisi parmi les polyuréthanes acrylés ou méthacrylés et les copolymères acryliques ayant des sites réactifs,
(D) de l'eau,
(E) un diluant organique volatil, et
(F) une quantité d'au moins un acide carboxylique permettant d'obtenir un pH mesuré de ladite composition qui est compris dans l'intervalle allant de 4, 0 à 6, 0, la majeure partie dudit acide carboxylique ayant une pression de vapeur d'au moins 100 kPa à 125 °C.

2. Composition selon la revendication 1, dont le constituant F est l'acide acétique.

3. Composition selon la revendication 1 ou 2, dont le constituant A est un condensat partiel d'un composé de formule
(R¹)ₐSi(OR²)₄₋ₐ
dans laquelle R¹ représente un radical hydrocarboné monovalent en C₁ à C₆, R² représente un atome d'hydrogène ou un radical hydrocarboné monovalent en C₁ à C₆, et a est égal à 1 ou 2.

4. Composition selon l'une quelconque des revendications précédentes, dont le constituant E est au moins un alcanol primaire ou secondaire en C₁ à C₄.

5. Composition selon l'une quelconque des revendications précédentes, dont le constituant C est un polyuréthane acrylé ou méthacrylé ou un copolymère acrylique ayant des sites hydroxyle réactifs.

6. Composition selon l'une quelconque des revendications précédentes, dans laquelle la quantité du constituant C représente d'environ 0, 1 % à environ 10 % en poids du poids de la composition durcissable totale.

7. Composition selon l'une quelconque des revendications précédentes, qui renferme en outre un catalyseur de durcissement.

8. Composition durcissable sous l'effet de la chaleur selon la revendication 1, qui comprend les ingrédients suivants et tout produit de réaction de ces ingrédients :
(A) un condensat partiel de méthyltriméthoxysilane,
(B) de la silice colloïdale,
(C) un agent favorisant l'adhérence, choisi parmi les polyuréthanes acrylés ou méthacrylés et les copolymères acryliques ayant des sites réactifs,
(D) de l'eau,
(E) au moins un alcanol primaire ou secondaire, en C₁ à C₄, en tant que diluant organique volatil, et
(F) de l'acide acétique en une quantité permettant d'obtenir un pH mesuré de ladite composition qui est compris dans l'intervalle allant de 4, 0 à 6, 0.

9. Procédé de production d'un revêtement durci sur une feuille thermoplastique, qui comprend :
(1) le revêtement de ladite feuille avec une composition durcissable sous l'effet de la chaleur, comprenant les ingrédients suivants et tout produit de réaction de ces ingrédients :
(A) un condensat partiel d'au moins un organoalcoxysilane,
(B) de la silice colloïdale,
(C) un agent favorisant l'adhérence, choisi parmi les polyuréthanes acrylés ou méthacrylés et les copolymères acryliques ayant des sites réactifs,
(D) de l'eau,
(E) un diluant organique volatil, et
(F) une quantité d'au moins un acide carboxylique permettant d'obtenir un pH mesuré de ladite composition qui est compris dans l'intervalle allant de 4, 0 à 6, 0, la majeure partie dudit acide carboxylique ayant une pression de vapeur d'au moins 100 kPa à 125 °C, et
(II) le durcissement sous l'effet de la chaleur de la feuille revêtue ainsi formée, dans des conditions permettant de volatiliser les constituants D, E et F.

10. Procédé selon la revendication 9, pour produire un revêtement durci sur une feuille thermoplastique, qui comprend :
(I) le revêtement de ladite feuille avec une composition durcissable sous l'effet de la chaleur, comprenant les ingrédients suivants et tout produit de réaction de ces ingrédients :
(A) un condensat partiel de méthyltriméthoxysilane,
(B)de la silice colloïdale,
(C)un agent favorisant l'adhérence, choisi parmi les polyuréthanes acrylés ou méthacrylés et les copolymères acryliques ayant des sites réactifs,
(D) de l'eau,
(E)au moins un alcanol primaire ou secondaire, en C₁ à C₄, en tant que diluant organique volatil, et
(F)de l'acide acétique en une quantité permettant d'obtenir un pH mesuré de ladite composition qui est compris dans l'intervalle allant de 4, 0 à 6, 0, et
(II) le durcissement sous l'effet de la chaleur de la feuille revêtue ainsi formée, dans des conditions permettant de volatiliser les constituants D, E et F.
